# EUROPÄISCHE PATENTSCHRIFT

(11) **EP 1 228 863 B1**
(45) Veröffentlichungstag und Bekanntmachung des Hinweises auf die Patenterteilung: **04.11.2015**
(21) Anmeldenummer: 01116984.4
(22) Anmeldetag: 12.07.2001
(51) Int. Cl.: B32B 27/32, C08J 5/18, C08K 3/00, A01G 13/02, C08K 5/00, C08K 3/04

(54) **Schutzfolie**
Protection film
Film de protection

(30) Priorität: 31.01.2001 DE 20201769 U
(43) Veröffentlichungstag der Anmeldung: 07.08.2002
(73) Patentinhaber: EWALD DÖRKEN AG, 58313 Herdecke (DE)
(72) Erfinder: Jablonka, Dieter, 58313 Herdecke (DE); Schroer, Jörn, Dr., 58313 Herdecke (DE); Klingelhage, Norbert, 58300 Wetter (DE)
(74) Vertreter: Von Rohr Patentanwälte Partnerschaft mbB

(56) Entgegenhaltungen:
- EP-A- 0 155 595
- EP-A- 0 607 031
- EP-A- 0 668 321
- US-A- 3 896 585
- DATABASE WPI Section Ch, Week 199528 Derwent Publications Ltd., London, GB; Class A97, AN 1995-211541 XP002180115 & JP 07 123875 A (SUMITOMO CHEM CO LTD), 16. Mai 1995 (1995-05-16)
- DATABASE WPI Section Ch, Week 198928 Derwent Publications Ltd., London, GB; Class A18, AN 1989-201891 XP002180116 & JP 01 139257 A (SUMITOMO CHEM IND KK), 31. Mai 1989 (1989-05-31)
- DATABASE WPI Section Ch, Week 199420 Derwent Publications Ltd., London, GB; Class A97, AN 1994-163818 XP002180117 & JP 06 107507 A (TAKIRON KK), 19. April 1994 (1994-04-19)

## Beschreibung

Die Erfindung betrifft eine die Verwendung einer Folie als Baufolie, insbesondere gegen Witterungseinflüsse.

Derartige Baufolien, die nachfolgend auch als Schutzfolien bezeichnet werden, werden für längerfristige oder sogar dauerhafte Abdeckungen und Umhüllungen zum Beispiel in der Land-, Bau und Forstwirtschaft benötigt. Der Einsatz von Schutzfolien dient dabei dem Werterhalt von Baumaterialien und dergleichen, soweit diese im Freien den Wetterbedingungen ausgesetzt sind. Auch zur vorübergehenden oder permanenten Abdeckung von Gerüsten oder von Balkenkonstruktionen an und in Gebäuden erweisen sich Schutzfolien als sinnvoll.

Im optimalen Fall wird eine Schutzfolie für derartige Zweck einem breiten Spektrum von Anforderungen gerecht:
Die Schutzfolie muss
   - zuverlässig wasserdicht sein, und zwar nicht nur gegen Wasser in flüssiger Form als Tropfen (Regen, Tau, nässender Nebel), sondern ebenso gegen sich ansammelndes, stehendes, flüssiges Wasser dicht sein und auch gegen Wasser in fester Form als Eiskristalle, Schnee, Hagel und dergleichen Schutz bieten;
   - sie soll nur eine geringe Wasseraufnahmefähigkeit besitzen;
   - sie muss unabhängig von den Witterungsbedingungen und ungeachtet der Temperatur im Sommer wie im Winter hohe Flexibilität und mechanische Widerstandskraft gegen Stoss und Schlag aufweisen; für viele Anwendungsfälle sollte sie trittfest sein oder, etwa durch Laminierung, entsprechend ausgerüstet werden können;
   - sie muss starke Temperaturwechsel vertragen und darf bei Kälte nicht verspröden;
   - sie darf an Durchstossungspunkten (wie sie zum Beispiel beim antakkern entstehen) auch unter gebrauchsüblicher Belastung nicht weiter reissen;
   - sie muss eine geeignete spezifische Dichte aufweisen; vor allem sollte sie hinreichend-leicht-für eine bequeme Handhabung sein;
   - sie muss sich problemlos schweissen und kleben lassen;
   - sie sollte gegen die Einwirkung von Lösemitteln und Umweltchemikalien weitgehend beständig sein;
   - sie sollte unter ökologischen Gesichtspunkten in Herstellung und Betrieb und Entsorgung möglichst keine Probleme aufwerfen;
vor allem aber muss
- sie möglichst beständig gegen die Kombinationswirkung von UV-Strahlung, Abbau durch Reaktion mit Atmosphärenbestandteilen und Wärmeeinwirkung sein;
- darüber hinaus muss sie parallel zu der vorgenannten, zuverlässigen Wasserdichtigkeit auch eine hohe Wasserdampfdurchlässigkeit aufweisen, damit die Bildung von schädlichem Schwitzwasser und schädlichen Eeuchtigkeitsstaus unter der Schutzfolie weitgehend a usgeschlossen werden kann und
bei alledem muss sie sich mit vertretbaren Kosten, also aus gut zugänglichen Rohstoffen und mit geringem Aufwand produzieren lassen.

Die letztgenannten Anforderungen sind für die Gebrauchstüchtigkeit und Wirtschaftlichkeit einer Schutzfolie von besonderer Bedeutung.

Zum einen leiten Licht, Luft, Sauerstoff und Wärme in Kunststoffen Abbauvorgänge ein, als deren Folge sich nicht nur das visuelle Erscheinungsbild ändert, sondern auch zahlreiche mechanische und physikalische Eigenschaften negativ beeinflusst werden.

Zum anderen verderben mit der Zeit durch Feuchtigkeitsstatus und Schwitzwasser unter einer nicht-diffusionsoffenen Schutzfolie in den meisten Anwendungsfällen die unter der Schutzfolie liegenden Materialien, und zwar entweder durch direkte chemische Einwirkung von Wassermolekülen oder durch Begünstigung mikrobieller Wachstumsbedingungen und der durch den Mikrobenstoffwechsel eingeleiteten Prozesse.

Bislang steht für das grosse Anwendungsgebiet der Bauwirtschaft im Stand der Technik noch keine Flächenmaterial zur Verfügung, das bei vertretbaren Herstellungskosten ein weitgehend optimales Spektrum der Gebrauchseigenschaften bietet. Dies gilt insbesondere in Hinsicht auf die wesentliche Kombination von Wasserdichtigkeit, Wasserdampfdurchlässigkeit und Beständigkeit gegen Abbau unter den Licht- und Wärmeeinwirkung.

Aus der JP 07 123875 A geht eine Landwirtschaftsfolie hervor, die einen 3-schichtigen Aufbau aufweist, wobei auf einer wasserdampfdurchlässigen und wasserdichten Trägerschicht eine Schicht mit einem schwarzen Pigment angeordnet ist. Die auf der Trägerschicht angeordnete Schichten weist dabei Löcher auf, damit die Wasserdampfdurchlässigkeit und Wasserdichtigkeit der Trägerschicht der gesamten Folie erhalten bleibt.

Aus der EP-A-0 155 595 ist eine Verpackungsfolie bekannt, die mindestens einen 2-schichtigen Aufbau mit einer Trägerschicht und einer Oberflächenschicht aufweist. Die bekannte Folie enthält Polypropylen und feste Teilchen mit einer mittleren Größe von 0,2 bis 20 µm. Des Weiteren ist Calciumcarbonat als Füllstoff sowie farbige und auch schwarze Pigmente vorgesehen. Darüber hinaus sind Russteilchen mit einer Größe von 0,1 bis 1 Mikrometern in Konzentrationen von 0,04 bis 1 Gew.-% vorgesehen.

Aus der US-A-5 732 745 geht eine Folie zum Schutz landwirtschaftlicher Produkte wie verschiedener Erntegüter hervor. Die bekannte Folie, die nicht wasserdampfdurchlässig ist, enthält Pigmente, welche blaue, grüne, braune und schwarze Pigmente umfassen. Die Pigmente haben eine Konzentration von 3 bis 8% eines Pigment-Masterbatches.

Aus der EP-A-0 982 431 gehen extrusionsbeschichtete Vliesbähnen aus Polyetylen hervor, enthaltend 0,2 bis 3% Pigmente, und deren Verwendung im Bauwesen.

Seit alters werden textile Materialien (Zeltplanen) für Abdeckzwecke eingesetzt. Diese sind zwar einigermaßen wasserdampfdurchlässig, aber auch bei Imprägnierung nicht zuverlässig wasserdicht, vor allem nicht gegen stehendes Wasser. Dazu können sie, insbesondere im nassen Zustand, kaum handhabungsfreundlich genannt werden.

Mit der Verfügbarkeit von polymeren Flächenmaterialien wurden dann Schutzfolien, insbesondere aus Polyethylen oder Polyvinylchlorid, zum Einsatz gebracht. Solche Polymerfolien sind kostengünstig herstellbar, mechanisch hinreichend stabil und zuverlässig wasserdicht. Gegenüber Zeltplanen stellen sie hinsichtlich der Handhabungsfreundlichkeit einen Fortschritt dar.

Es ist auch durchaus möglich, PE- oder PVC-Folien mit bekannten UV-Absorbentien und Antioxidantien für das eine oder andere Anwendungsgebiet hinreichend alterungsbeständig zu machen. Es liegt für die unterschiedlichsten Polymere ein umfangreiches Repertoire an Stabilisator-Rezepturen vor. Die Lebensdauer einer frei zu bewitternden Folie kann durch Zugabe entsprechender Stabilisatormengen in gewissen Grenzen bedarfsgerecht eingestellt werden. Derartige stabile Schutzfolien sind zwar billig und hervorragend wasserdicht, aber nicht diffusionsoffen gegenüber Wasserdampf.

Die in neuerer Zeit verfügbaren, wasserdichten und gut wasserdampfdurchlässigen polymeren Flächenmaterialien auf Polyester- oder Polyurethanbasis, die im Bekleidungsbereich als Klimamembranen mit Vorteil eingesetzt werden, scheiden als schützende Flächenmaterialien in der Bauwirtschaft schon aus Kostengründen aus.

Feuchtigkeitshemmende und gleichzeitig wasserdampfdurchlässige, dünne Folien auf der Basis von verstreckten, mit anorganischen Füllstoffen versehenen, verschiedenen Thermoplasten sind bisher aus dem Sanitärbereich bekannt. Derartige Folien werden im Zusammenhang mit wasserabsorbierenden Schichten in sanitären Verbrauchsartikeln als zusätzlicher Nässeschutz verwendet. Vor allem ihre geringe Lebensdauer unter natürlichen

Bedingungen macht diese Folien als grossflächige Materialien für den bau-, land- und forstwirtschaftlichen Einsatz als Witterungsschutz im Freien ungeeignet.

Aufgabe der vorliegenden Erfindung ist es daher, eine Schutzfolie zur Verfügung zu stellen, mit deren Hilfe die Nachteile des Standes der Technik überwunden werden, wobei die Schutzfolie insbesondere
- hohe und dauernde Thermo-, Chemo- und UV-Stabilität unter insbesondere erheblich verbesserter Erhaltung von Reisskraft und Reissdehnung und
- unter allen natürlichen Druck- und Temperaturbedingungen ausgezeichnete Wasserdampfdurchlässigkeit
aufweist.

Diese Aufgabe wird durch die Schutzfolie mit den Merkmalen des Anspruchs 1 gelöst. Die Ansprüche 2 und 7 betreffen vorteilhafte Ausführungsformen dieser Schutzfolie.

Die vorliegende, in Anspruch 1 charakterisierte Erfindung macht es auf vergleichsweise einfache Weise möglich, durch Einarbeitung dunkler Pigmente in verstreckte, harte Füllstoffe enthaltende polyolefinische Polymere verschiedener Art, die Wirtschafts- und Gebrauchsanforderungen, die an eine Schutzfolie für die Bauwirtschaft gestellt werden, weitgehend zu erfüllen. Es hat sich überraschend erwiesen, dass derartige mit dunklen Pigmenten ausgerüstete, polyolefinische, harte Füllstoffe enthaltende, durch Verstreckung diffusionsoffene Folien eine ausgezeichnete kombinierte Witterungsstabilität (vor allem gegen UV-Bestrahlung und thermische Belastung) bei erhöhter Wasserdampfdurchlässigkeit und auch in den übrigen genannten Gebrauchsaspekten -positive Eigenschaften aufweisen.

Diese günstige Kombination von Eigenschaften gemäss der Lehre der Erfindung kann allgemein mit polyolefinischen Homopolymeren, Copolymeren, Blends und dergleichen erreicht werden. Die positiven Auswirkungen der dunklen Pigmentierung ist zudem unabhängig von vorhandenen Additiven, seinen es Weichmacher, Weisspigmente, UV-Absorber, Antioxidantien, Antistatika oder ähnliche Substanzen, mit denen weitere Eigenschaften der Schutzfolie eingestellt werden können.
Nach den vorliegenden Erkenntnissen ist die positive technische Wirkung der erfindungsgemässen Lehre weitgehend unabhängig von der chemischen Natur, der speziellen Farbe und den Kornabmessungen der verwendeten Pigmente, die auch in Mischung verwendet werden können. Es kommen für die Zwecke der Erfindung vor allem blaue, grüne, braune und - die Schutzfolie nach Verstreckung grau erscheinen lassende - schwarze Pigmentierungen in Frage. Der Fachmann kann die Wahl unter handelsüblichen Pigmentformulierungen nach Kostengesichtspunkten treffen und ist frei, gegebenenfalls erwünschte Zusatzeigenschaften technischer oder ästhetischer Art bei der Entscheidung für ein bestimmtes Pigment oder eine bestimmte Pigmentmischung mit zu berücksichtigen.
Kostengesichtspunkte können auch die als zweckmässig erkannten Pigmentkonzentrationen in der erfindungsgemässen Schutzfolie bestimmen.

Unterhalb einer Konzentration von 0,5 Gew.% des Pigments oder der Pigmente bezogen auf das Gesamtgewicht der Schutzfolie ist nicht mit zuverlässiger Wirkung im Sinne der Erfindung zu rechnen; oberhalb von 10 Gew. % werden auch die derzeit zur Verfügung stehenden 'billigen' dunklen Pigmenten eher unwirtschaftlich.
Als zweckmässiger Kompromiss zwischen der positiven Wirkung auf insbesondere UV- und Thermostabilität sowie Wasserdampfdurchlässigkeit einerseits und Kostenaufwand andererseits haben sich Pigmentkonzentrationen von 0,5 Gew.% bis 3 Gew.% herausgestellt. Sichere und gute Ergebnisse erhält man generell mit Pigmentkonzentrationen von 1,5 Gew.% bis 2,5 Gew.% bezogen auf das Gesamtgewicht der Schutzfolie,

Wie erwähnt, sind die speziellen Abmessungen der verwendeten dunklen Pigmente ohne grosse Bedeutung für den erwünschten allgemeinen Stabilisierungseffekt. Der Einsatz von Partikeln im Durchmesserbereich von 5 nm bis 5000 nm ist im Sinne der erfindungsgemässen Lehre erfolgversprechend. Unerwartet wurde gefunden, dass der beobachtete günstige Einfluss auf die Wasserdampfdurchlässigkeit sich mit abnehmendem-mittleren Partikeldurchmesser des Pigments oder der Pigmente verstärkt, so dass neben der guten Witterungsstabilisierung eine Erhöhung der Wasserdampfdurchlässigkeit zu verzeichnen ist, die die Funktionalität der erfindungsgemässen Schutzfolie noch weiter optimiert. Bei Partikeldurchmessern unter 500 nm tritt nach den bisherigen Erkenntnissen diese erwünschte Eigenschaft besonders deutlich zutage.

Während die chemische Natur der erfindungsgemäss geeigneten dunklen Pigmente-keiner-besonderen Beschränkung unterliegt, sprechen Verfügbarkeitsgründe für den Einsatz von Metalloxiden, zum Beispiel Eisenoxidschwarz, Graphiten und Russen.
Vor allem unter dem Kostengesichtspunkt ist derzeit die Verwendung von Kohlenstoffpartikeln, also Russ bevorzugt. Ausgezeichnete Ergebnisse hinsichtlich der Witterungstabilität und der Wasserdampfdurchlässigkeit bei hervorragender Wasserdichtigkeit ist mit Russ zu erreichen, dessen mittlerer Partikeldurchmesser im Bereich von 20 bis 100 nm liegt.
Die äussere Form der Partikel ist dabei nicht kritisch. Auch langgestreckte Kohlenstoffpartikel mit einem Durchmesser von wenigen nm, sogenannte 'nano - tubes' können mit Vorteil in füllstoffhaltigen, durch Verstreckung mit diffusionsoffenen Porenstrukturen versehenen Polyolefinen zur Witterungsstabilisierung und Erhöhung der Wasserdampfdurchlässigkeit eingesetzt werden. Derartige Schutzfolien gemäss der Erfindung zeichnen sich dann zusätzliche technische Eigenschaften, wie etwa elektrische Leitfähigkeit aus.

Ebensowenig kritisch für den erfindungsgemäss erreichbaren technischen Kombinationseffekt ist die Art der Füllstoffe in dem verstreckten polyolefinischen Homopolymeren, Copolymeren oder Blend. Füllstoffe verschiedenster chemischer Struktur führen beim Verstrecken zu offenen Mikroporensystemen. Für die hier beschriebene Schutzfolie, bei der weder hygroskopische Eigenschaften noch biologische Abbaubarkeit erwünscht sind, erweist es sich als zweckmässig als Füllstoffe synthetische oder natürliche anorganische Substanzen einzusetzen, Diese sind, insbesondere in Form von Calciumcarbonaten hinreichend inert, haben eine günstige Dichte und sind insbesondere in Form von natürlichen Calciummineralien, wie etwa Kreide, günstig zu beschaffen.
Sollen Jedoch besondere Eigenschaften der Schutzfolie, wie zum Beispiel eine erheblich erhöhte Flammtestigkeit bewirkt werden, können als Füllstoffe ohne weiteres auch Hydroxide, wie Aluminiurinhydroxid oder Dawsonit zum Einsatz kommen.
Ein besonderer Aspekt der vorliegenden Erfindung ist die Möglichkeit, durch Zusatz des dunklen Pigements oder der dunklen Pigmente - und durch die dadurch verbesserte Wasserdampfdurchlässigkeit - mit geringeren Füllstoffmengen zu arbeiten. Der dadurch verringerte Feststoffgehalt und die verringerte Porosität bei gleichwohl guter Wasserdampfdurchlässigkeit haben zusätzliche positive Auswirkungen auf die mechanischen Eigenschaften und die Witterungsstabilität der Schutzfolie.
Wie bereits erwähnt, ist die chemische Spezifikation des eingesetzten Polyolefins nicht wesentlich für den erfindungsgemössen technischen Effekt.

Günstige Ergebnisse werden bereits ersielt, wenn die Schutzfoüen gemäss der Erfindung auf kostengünstige Weise nur monoaxial verstreckt sind. Unregelmässige monoaxiale Verstreckung mit nebeneinander vorliegenden un-, teil- und vollverstreckten Bereichen im Flächenverlauf der Schutzfolie stellt dabei die Funktionalität der erfindungsgemässen dunkel pigmentierten Schutzfolie nicht in Frage.
Nach der Lehre der Erfindung ist es jedoch auch möglich von biaxial verstreckten Folien Gebrauch zu machen. Auch derartige Folien können unregelmässigen Verstreckungsverhaitnisse aufweisen und sogar verstreckte und unverstreckte Bereiche nebeneinander aufweisen, ohne dass der erfindungsgemässe technische Erfolg in Frage gestellt wird.

Die erfindungsgemässen Schutzfolien können als solche direkt zum Einsatz kommen. Es ist jedoch vorteilhaft, sie insbesondere zur Erhöhung der mechanischen Stabilität in an sich bekannter Weise als Funktionsschicht in flächigen Verbundwerkstoffen zu verwenden.
Die hier beschriebene und in den Ansprüchen unter Schutz gestellte Erfindung stellt somit vor allem hinsichtlich der Witterungsstabilität und Wasserdampfdurchlässigkeit bislang unzugängliche, gebrauchstüchtige Schutzfolien in einer Vielzahl von möglichen Varianten zur Verfügung. Die Möglichkeit, mit kostengünstigen Ausgangsmaterialien gute Ergebnisse zu erzielen macht die Erfindung wirtschaftlich besonders interessant.

Die Wirkungsweise der Erfindung wird anhand der folgenden Ausführungsbeispielen erläutert:

Es wurde jeweils eine Polymerbasis mit Pigmentkonzentrat und an sich bekannten Additiven unter weitgehend gleichen Verfahrensbedingungen zu einer Primärfolie von ca. 135 g/m² extrudiert und in zwei Verstreckschritten monoaxial um den Gesamtfaktor 4,5 auf ein Flächengewicht von ca. 30 g/m² verstreckt.

| Basisrezepturen: | | |
|---|---|---|
| Beispielrezeptur | Polymerbasis | Füllstoff |
| 1 | Blend eines Polypropylen-Homopolymer (PP-H) mit einem Polypropylen-Random-Copolymer (PP-R) und einem linearen Polyethylen niedriger Dichte (PE-LLD) | Calciumcarbonat CaCO₃ Typ 3 mit einer mittleren Korngrösse von ca. 2 µm |
| 2 | Blend eines Polypropylen-Homopolymer (PP-H) mit einem Polypropylen-Random-Copolymer (PP-R) und einem linearen Polyethylen niedriger Dichte (PE-LLD) | Calciumcarbonat CaCO₃ Typ 2 mit einer mittleren Korngrösse von ca. 1,8 µm |
| 3 | Polypropylen (PP) | Calciumcarbonat CaCO₃ Typ 3 mit einer mittleren Korngrösse von ca. 2 µm |
| 4 | Blend eines Polypropylen-Homopolymer (PP-H) mit einem Polypropylen-Random-Copolymer (PP-R) und einem linearen Polyethylen niedriger Dichte (PE-LLD) | Calciumcarbonat CaCO₃ Typ 4 mit einer mittleren Korngrösse von ca. 1,8 µm |

| Pigmentkonzentrate: | | |
|---|---|---|
| Konzentrat | Trägermaterial | Pigment/Anteil ca. 40% |
| 1 | Polyethylen niedriger Dichte (PE-LD | Russ Typ1, Partikeldurchmesser 60-70 nm |
| 2 | Polyethylen niedriger Dichte (PE-LD) | Russ Typ2, Partikeldurchmesser 20 nm |
| 3 | Polyethylen niedriger Dichte (PE-LD) | Russ Typ 3, Partikeldurchmesser 20 -23 nm |

| Additive: | |
|---|---|
| Paket | Beschreibung |
| 1 | 1,05 % Anteil einer Mischung aus einem gehinderten amidischen Lichtschutzmittel (HALS), primären Antioxidantien (prim. AO) und sekundären Antioxidantien (sek. AO) |
| 2 | primäre Antioxidantien |
| 3 | 1,05 % Anteil einer Mischung aus einem gehinderten amidischen Lichtschutzmittel (HALS), primären Antioxidantien (prim. AO) und sekundären Antioxidantien (sek. AO) |

Die folgenden Tabellen zeigen Beispielergebnisse mit den angegebenen Rezepturen. Aufgeführt sind die Gehalte in Gewichtsprozent; die Wasserdampfdurchlässigkeit wurde nach DIN 52615 (23 °C/o-80) gemessen und die relative Reissdehnung (RD), bezogen auf die als 100 % gesetzte Reissdehnung vor der Bewitterung nach 336 h beziehungsweise 672 h künstlicher Bewitterung in einem QUV-Gerät gemäss DIN 53384, Lampen UVA 340 (Typl) [ 0,77 W/( m² x nm)] gemessen.

### Bewitterungsergebnisse

**Tabelle 1: Basisrezeptur 1 + Additivpaket 1**

| Pigment Konzentrat | Partikelgehalt Gew.% | Gehalt CaCO₃ Gew.% | Gehalt Pigment Gew.% | WDD [g/(m² x 24 h)] | RD 336 h | RD 672 h |
|---|---|---|---|---|---|---|
| kein | 60 | 60 | 0 | 1557 | 8,7 | 3,2 |
| 1 | 59 | 57,1 | 1,9 | 1542 | 67,3 | 46,6 |
| 2 | 59 | 57,1 | 1,9 | 1600 | | |
| kein | 58 | 58 | 0 | 1310 | | |
| kein | 56 | 56 | 0 | 1180 | | |
| kein | 54 | 54 | 0 | 825 | | |
| kein | 52 | 52 | 0 | 750 | | |
| kein | 50 | 50 | 0 | 527 | 13,1 | 6,1 |

**Tabelle 2: Basisrezeptur 2 + Additivpaket 1**

| Pigment Konzentrat | Partikelgehalt Gew.% | Gehalt CaCO₃ Gew.% | Gehalt Pigment Gew.% | WDD [g/(m² x 24 h)] | RD 336 h | RD 672 h |
|---|---|---|---|---|---|---|
| kein | 60 | 60 | 0 | 1375 | 18,3 | 6,3 |
| 2 | 59 | 57,1 | 1,9 | 1328 | 81,4 | 68,1 |
| kein | 50 | 50 | 0 | 427 | 24,6 | 15,4 |

**Tabelle 3: Basisrezeptur 3 + Additivpaket 2**

| Pigment Konzentrat | Partikelgehalt Gew.% | Gehalt CaCO₃ Gew.% | Gehalt Pigment Gew.% | WDD [g/(m² x 24 h)] | RD 336 h | RD 672 h |
|---|---|---|---|---|---|---|
| kein | 60 | 60 | 0 | 1513 | | |
| 2 | 59 | 57,1 | 1,9 | 1690 | 84,7 | |
| 3 | 59 | 56,9 | 2,1 | 1558 | | |
| 3 | 58,1 | 56 | 2,1 | 1537 | | |

**Tabelle 4: Basisrezeptur 3 + Additivpaket 3**

| Pigment Konzentrat | Partikelgehalt Gew.% | Gehalt CaCO₃ Gew.% | Gehalt Pigment Gew.% | WDD [g/(m² x 24 h)] | RD 336 h | RD 672 h |
|---|---|---|---|---|---|---|
| kein | 57,1 | 57,1 | 0 | 1380 | 37,7 | 9,2 |
| 3 | 56,3 | 54,3 | 2 | 1513 | | |

**Tabelle 5: Basisrezeptur 4 + Additivpaket 1**

| Pigment Konzentrat | Partikelgehalt Gew.% | Gehalt CaCO₃ Gew.% | Gehalt Pigment Gew.% | WDD [g/(m² x 24 h)] |
|---|---|---|---|---|
| kein | 60 | 60 | 0 | 1403 |
| kein | 59 | 59 | 0 | 1304 |
| 1 | 59 | 56,9 | 2,1 | 1325 |
| kein | 58 | 58 | 0 | 1173 |
| 1 | 58 | 57,2 | 0,8 | 1112 |
| 1 | 58 | 54,4 | 3,6 | 1299 |

## Patentansprüche

1. Verwendung einer Folie als Baufolie, wobei die Folie eine hohe Dichtigkeit gegen Wasser in flüssiger und fester Form aufweist und im wesentlichen aus einem harte Füllstoffe enthaltenden, verstreckten, eine für gasförmiges Wasser durchlässige Mikroporenstruktur aufweisenden, polyolefinischen Homopolymeren, Copolymeren oder Polymerblend besteht und wobei in der Folie blaue, grüne, braune oder schwarze Pigmente vorhanden sind, die an der Baufolie einen Anteil von wenigstens 0,5 Gew.-% und höchstens 10 Gew.-% bezogen auf das Gesamtgewicht der Folie haben, und wobei die mittleren Partikeldurchmesser der blauen, grünen, braunen oder schwarzen Pigmente im Bereich von 20 nm bis 500 nm liegen.

2. Verwendung einer Folie nach Anspruch 2, **dadurch gekennzeichnet, daß** die Pigmente ausgewählt sind aus der Gruppe der unlöslichen bunten und unbunten anorganischen und organischen Pulverpigmente, bevorzugt ausgewählt aus der Gruppe der Metalloxide, Russe und Graphite, wobei Ruß mit einem mittleren Partikeldurchmesser von 20 bis 100 nm ganz besonders bevorzugt ist.

3. Verwendung einer Folie nach einem der Ansprüche 1 bis 2, **dadurch gekennzeichnet, daß** die Pigmente an der Folie einen Anteil von wenigstens 0,5 Gew.-% und höchstens 3 Gew.-%, bevorzugt 1,5 Gew.-% bis 2,5 Gew.-%, bezogen auf das Gesamtgewicht der Folie, ausmacht (ausmachen).

4. Verwendung einer Folie nach einem der Ansprüche 1 bis 3, **dadurch gekennzeichnet, daß** der (die) Füllstoff(e) ausgewählt sind aus der Gruppe der natürlichen oder synthetischen anorganischen Substanzen, bevorzugt ausgewählt aus der Gruppe der Carbonate, Sulfate, Oxide, Hydroxide und/oder Silikate ist (sind), wobei Calciumcarbonat besonders bevorzugt ist.

5. Verwendung einer Folie nach einem der Ansprüche 1 bis 4, **dadurch gekennzeichnet, daß** die Folie biaxial verstreckt ist, wobei die Folie bevorzugt in Längs- und Querrichtung ungleiche Verstreckungsgrade aufweist, und besonders bevorzugt im Flächenverlauf der Folie un-, teil- und vollständig verstreckte Bereiche nebeneinander vorliegen.

6. Verwendung einer Folie nach einem der Ansprüche 1 bis 4, **dadurch gekennzeichnet, daß** die Folie monoaxial verstreckt ist, wobei bevorzugt im Flächenverlauf der Folie un-, teil- und vollständig verstreckte Bereiche nebeneinander vorliegen.

7. Verwendung eines flächigen Verbundmaterials als Baufolie, wobei das Verbundmaterial die Folie nach einem der Ansprüche 1- 6 als Funktionsschicht aufweist.

## Claims

1. Use of a film as a construction film, wherein the film has a high impermeability to water in liquid and solid form and consists of essentially hard fillers, stretched, microporous structure permeable to gaseous water, comprising polyolefinic homopolymers, copolymers or polymer blend, and wherein in the film is available in blue, green, brown or black pigments, of which the construction film has an amount of at least 0.5 wt .-% and at most 10 wt .-% based on the total weight of the film, and wherein the average particle diameter of the blue, green, brown or black pigments is in the range of 20 nm to 500 nm.

2. Use of a film according to claim 1, **characterised in that** the pigments are selected from the group of insoluble coloured and achromatic inorganic and organic powder pigments, preferably selected from the group of metal oxides, carbon blacks and graphite, wherein the carbon black with an average particle diameter from 20 to 100 nm is particularly preferred.

3. Use of a film according to any one of the claims 1 to 2, **characterised in that** the pigment(s) in the film account(s) for a proportion of at least 0.5 wt .-% and at most 3 wt.-%, preferably 1.5 wt.-% to 2.5 wt.-%, based on the total weight of the film.

4. Use of a film according to one of the claims 1 to 3, **characterised in that** the filler(s) is/are selected from the group of natural or synthetic inorganic substances, preferably selected from the group of carbonates, sulphates, oxides, hydroxides and/or silicates, wherein calcium carbonate is particularly preferred.

5. Use of a film according to any one of the claims 1 to 4, **characterised in that** the film is stretched biaxially, wherein the film preferably has uneven degrees of stretching in the longitudinal and lateral directions, wherein non-stretched, partially stretched and fully stretched areas are particularly preferably adjacent to one another in the film surface area progression.

6. Use of a film according to any one of the claims 1 to 4, **characterised in that** the film is stretched monoaxially, wherein non-stretched, partially stretched and fully stretched areas are preferably adjacent to one another in the film surface area progression.

7. The use of a planar composite material as a construction film, wherein the composite material comprises the film as a function layer according to any of the claims 1- 6.

## Revendications

1. Utilisation d'un film en tant que film de construction, ce film présentant une étanchéité élevée contre l'eau sous forme liquide et solide et constituée essentiellement d'une structure microporeuse contenant des charges dures, étirée, perméable à l'eau sous forme gazeuse, des homopolymères polyoléfines, des copolymères ou un mélange de polymères et, dans le film, des pigments bleus, verts, bruns ou noirs étant présents, qui représentent une part du film de construction d'au moins 0,5% en poids et de 10% en poids au maximum par rapport au poids total du film et les diamètres moyens des particules des pigments bleus, verts, bruns ou noirs se trouvent dans une plage de 20 nm à 500 nm.

2. Utilisation d'un film selon la revendication 2, **caractérisée en ce que** les pigments sont sélectionnés dans le groupe constitué de pigments en poudre anorganiques et organiques insolubles colorés et non colorés, sélectionnés de préférence dans le groupe des oxydes métalliques, des suies et des graphites, la suie présentant plus particulièrement de préférence un diamètre moyen de particules de 20 nm à 100 nm.

3. Utilisation d'un film selon l'une des revendications 1 à 2, **caractérisée en ce que** les pigments représentent une part du film d'au moins 0,5% en poids et 3% en poids au maximum, de préférence de 1,5% en poids à 2,5% en poids par rapport au poids total du film.

4. Utilisation d'un film selon l'une des revendications 1 à 3, **caractérisée en ce que** la (les) charge(s) est (sont) sélectionnée(s) dans le groupe des substances naturelles ou synthétiques anorganiques, de préférence sélectionnées dans le groupe des carbonates, des sulfates, des oxydes, des hydroxydes et/ou des silicates, le carbonate de calcium étant particulièrement préféré.

5. Utilisation d'un film selon l'une des revendications 1 à 4, **caractérisée en ce que** le film est étiré de manière biaxiale, le film comprenant de préférence des degrés d'extension non égaux dans les directions longitudinale et transversale et, plus particulièrement de préférence dans l'extension surfacique du film, des zones non étirées, partiellement étirées et complètement étirées se trouvent les unes à côté des autres.

6. Utilisation d'un film selon l'une des revendications 1 à 5, **caractérisée en ce que** le film est étiré de manière monoaxiale, plus particulièrement de préférence dans l'extension surfacique du film, des zones non étirées, partiellement étirées et complètement étirées se trouvant les unes à côté des autres.

7. Utilisation d'un matériau composite plat en tant que film de construction, le matériau composite comprenant le film selon l'une des revendications 1 à 6 en tant que couche fonctionnelle.
